# DEMANDE DE BREVET EUROPEEN

(11) **EP 4 749 379 A1**
(43) Date de publication de la demande: **27.05.2026**
(21) Numéro de dépôt: 24214750.2
(22) Date de dépôt: 22.11.2024
(51) Int. Cl.: G04D 3/00, A44C 5/18, G04B 13/02, G04B 15/14, G04B 37/22, B23K 26/0622, B23K 26/082, B23K 26/08, B23K 26/356

(54) **PROCEDE DE DURCISSEMENT LASER D'UNE PARTIE FONCTIONNELLE D'UNE PIECE HORLOGERE OU JOAILLERE**

(71) Demandeur: Richemont International S.A., 1752 Villars-sur-Glâne (CH)
(72) Inventeur: LEUENBERGER, Anaïs, 1443 ESSERT-SOUS-CHAMPVENT (CH); KENTHESWARAN, Vasuki, 25300 PONTARLIER (FR); KHELFA, Lina, 25300 Pontarlier (FR)
(74) Mandataire: Novagraaf International SA

(57) **Abrégé**

L'invention concerne un procédé de durcissement laser d'une partie fonctionnelle d'une pièce horlogère ou joaillère, comprenant les étapes consistant à :
- se munir de la pièce horlogère ou joaillère,
- générer un faisceau laser avec un laser à impulsions ultra-brèves,
- exposer une surface fonctionnelle de la pièce horlogère ou joaillère au faisceau laser pour augmenter la dureté de la surface fonctionnelle.

## Description

### Domaine technique de l'invention

La présente invention concerne de manière générale les procédés de fabrication de pièces horlogères ou joaillères. En particulier, la présente invention concerne les procédés de fabrication de pièces horlogères ou joaillères comprenant des surfaces fonctionnelles qui sont destinées à entrer en contact ou à coopérer avec d'autres composants d'un mécanisme horloger.

### État de la technique

Dans les procédés de fabrication de pièces horlogères ou joaillères de l'art antérieur, on connait le document EP3663865A1 qui décrit la fabrication d'un axe de balancier avec un usinage laser d'une barre d'alliage. En fonction de l'alliage utilisé, ce document ne propose pas de solution pour fournir un axe de balancier avec une résistance élevée à la friction au niveau des pivots de l'axe de balancier et/ou avec un coefficient de frottement réduit

### Exposé de l'invention

Un but de la présente invention est de répondre aux inconvénients de l'art antérieur mentionnés ci-dessus et en particulier, tout d'abord, de proposer un procédé de fabrication de pièces horlogères ou joaillères comprenant des surfaces fonctionnelles avec une résistance élevée à la friction et/ou avec un coefficient de frottement réduit.

Pour cela un premier aspect de l'invention concerne un procédé de durcissement laser d'une partie fonctionnelle d'une pièce horlogère ou joaillère, comprenant les étapes consistant à :
- se munir de la pièce horlogère ou joaillère,
- générer un faisceau laser avec un laser à impulsions ultra-brèves,
- exposer une surface fonctionnelle de la pièce horlogère ou joaillère au faisceau laser pour augmenter la dureté de la surface fonctionnelle.

Selon la mise en oeuvre ci-dessus, la source laser est un laser à impulsions ultra-brèves c'est-à-dire typiquement un laser femtoseconde ou un laser picoseconde. Ainsi, l'exposition de la surface fonctionnelle de la pièce horlogère ou joaillère au faisceau laser formé par des impulsions ultra-brèves permet d'augmenter localement la dureté de la surface fonctionnelle. Ainsi, on peut prévoir de choisir selon des critères relatifs à la fabrication une matière aisée à usiner pour façonner une pièce horlogère ou joaillère particulière, et le procédé de durcissement laser permet de durcir localement la pièce horlogère ou joaillère. Ceci permet de donner initialement plus de choix de matières pour réaliser la pièce horlogère ou joaillère. On peut constater que le procédé de durcissement laser permet de durcir localement la pièce horlogère ou joaillère et on peut noter une réduction du coefficient de frottement sur la surface fonctionnelle.

En particulier, l'invention peut se rapporter à un procédé de durcissement laser d'une partie fonctionnelle d'une pièce horlogère ou joaillère, comprenant les étapes consistant à :
- se munir de la pièce horlogère ou joaillère,
- générer un faisceau laser avec un laser à impulsions ultra-brèves, le faisceau laser comprenant au moins une impulsion laser d'une durée comprise entre 100 et 20000 femtosecondes,
- exposer une surface fonctionnelle de la pièce horlogère ou joaillère au faisceau laser, de sorte à augmenter la dureté de la surface fonctionnelle dans la zone d'impact.

En particulier, l'invention peut se rapporter à un procédé de durcissement laser d'une partie fonctionnelle d'une pièce horlogère ou joaillère, comprenant les étapes consistant à :
- se munir de la pièce horlogère ou joaillère,
- générer un faisceau laser avec un laser à impulsions ultra-brèves, le faisceau laser comprenant au moins une impulsion laser d'une durée comprise entre 100 et 20000 femtosecondes,
- exposer une surface fonctionnelle de la pièce horlogère ou joaillère au faisceau laser, de sorte à générer une onde de choc dans la zone d'impact pour augmenter la dureté de la surface fonctionnelle.

En particulier, l'invention peut se rapporter à un procédé de durcissement laser d'une partie fonctionnelle d'une pièce horlogère ou joaillère, comprenant les étapes consistant à :
- se munir de la pièce horlogère ou joaillère,
- générer un faisceau laser avec un laser à impulsions ultra-brèves, le faisceau laser comprenant au moins une impulsion laser d'une durée comprise entre 100 et 20000 femtosecondes,
- exposer une surface fonctionnelle de la pièce horlogère ou joaillère au faisceau laser, de sorte à générer un plasma dans la zone d'impact pour augmenter la dureté de la surface fonctionnelle.

En particulier, l'invention peut se rapporter à un procédé de durcissement laser d'une partie fonctionnelle d'une pièce horlogère ou joaillère, comprenant les étapes consistant à :
- se munir de la pièce horlogère ou joaillère,
- générer un faisceau laser avec un laser à impulsions ultra-brèves, le faisceau laser comprenant au moins une impulsion laser d'une durée comprise entre 100 et 20000 femtosecondes et présentant une fluence comprise entre 0,2 et 400 J/cm²,
- exposer une surface fonctionnelle de la pièce horlogère ou joaillère au faisceau laser.

Le procédé de durcissement laser peut être défini par les caractéristiques suivantes, prises individuellement ou en combinaison.

Selon un mode de réalisation, l'exposition de la surface fonctionnelle conduit à générer un plasma prévu pour augmenter la dureté de la surface fonctionnelle. On peut prévoir avec un tel faisceau laser de générer un plasma de très haute pression, de l'ordre de 10⁹ Pa qui se détend ensuite. La détente entraîne une compression de la surface fonctionnelle et cette source d'énergie de haute densité peut affecter l'orientation des grains et déclencher leur glissement, créant ainsi un nombre important de dislocations qui vont écrouir et durcir localement la surface fonctionnelle.

Selon un mode de réalisation, l'exposition de la surface fonctionnelle conduit à générer une onde de choc prévue pour augmenter la dureté de la surface fonctionnelle. On peut prévoir avec un tel faisceau laser de générer une onde de choc (via une compression / détente locale) qui peut créer un nombre important de dislocations qui vont écrouir et durcir localement la surface fonctionnelle.

Selon un mode de réalisation, le faisceau laser comprend entre 1 et 2000 impulsions, de préférence entre 20 et 1000 impulsions, et de préférence entre 50 et 200 impulsions. On évite tout échauffement local de la matière pouvant conduire à un recuit et/ou à une diminution de la dureté.

Selon un mode de réalisation, le faisceau laser présente une fluence comprise entre 0,2 et 400 J/cm², de préférence entre 0,3 et 250 J/cm², de préférence entre 5 et 135 J/cm², et de préférence entre 10 et 120 J/cm². L'intérêt d'un laser à impulsions ultra-brèves (un laser femtoseconde ou picoseconde) est de générer des impulsions extrêmement courtes de très haute énergie. Cette très courte durée d'interaction laser - matière n'induit peu ou pas d'échauffement ni de fusion de la zone irradiée, permettant ainsi de s'affranchir de l'utilisation d'un revêtement sacrificiel ou d'eau.

Selon un mode de réalisation, le faisceau laser présente une polarisation sensiblement perpendiculaire à l'impact de ladite au moins une impulsion. On peut prévoir une polarisation linéaire, dans laquelle le faisceau laser peut présenter une répartition privilégiée de l'orientation des vibrations qui le compose dans un plan. En particulier, le champ électrique peut parcourir alors un segment de droite en un point donné, typiquement le point d'impact sur la pièce horlogère ou joaillère. Selon un mode de réalisation, le segment de droite peut être aligné ou parallèle à un axe de révolution de la pièce ou de la surface fonctionnelle.

Selon un mode de réalisation, le faisceau laser présente une polarisation sensiblement circulaire. En particulier, le champ électrique peut être de norme constante et parcourir un cercle en un point donné, typiquement le point d'impact sur la pièce horlogère ou joaillère.

Selon un mode de réalisation, le faisceau laser présente une polarisation sensiblement elliptique. En particulier, le champ électrique peut parcourir une ellipse en un point donné, typiquement le point d'impact sur la pièce horlogère ou joaillère. Selon un mode de réalisation, le grand axe de l'ellipse peut être aligné ou parallèle à un axe de révolution de la pièce ou de la surface fonctionnelle.

Selon un mode de réalisation, le faisceau laser comprend une pluralité d'impulsions et l'exposition de la surface fonctionnelle est effectuée avec un recouvrement d'au moins une partie des impulsions compris entre 80 % et 8000 %, de préférence entre 100 % et 4000 %, et de préférence entre 200 % et 2000 %.

Selon un mode de réalisation, le faisceau laser comprend au moins une impulsion laser d'une durée comprise entre 100 et 20000 femtosecondes, de préférence entre 100 et 10000 femtosecondes, de préférence entre 100 et 5000 femtosecondes, de préférence entre 100 et 1000 femtosecondes, de préférence entre 100 et 500 femtosecondes, et de préférence entre 300 et 500 femtosecondes. Selon un mode de réalisation, on peut utiliser un laser femtoseconde. Un laser femtoseconde est un type de laser particulier qui produit des impulsions ultra-courtes ou ultra-brèves dont la durée est de l'ordre de quelques femtosecondes à quelques centaines de femtosecondes. L'intérêt d'un laser à impulsions ultra-brèves (un laser femtoseconde ou picoseconde) est de générer des impulsions extrêmement courtes de très haute énergie. Cette très courte durée d'interaction laser - matière n'induit pas d'échauffement ni de fusion de la zone irradiée, permettant ainsi de s'affranchir de l'utilisation d'un revêtement sacrificiel ou d'eau, et/ou de garantir toute absence de recuit.

Selon un mode de réalisation, le faisceau laser présente une dimension d'irradiation, telle que la taille du spot, comprise entre 1 et 100 µm, de préférence entre 1 et 50 µm, et de préférence entre 1 et 20 µm.

Selon un mode de réalisation, le faisceau laser présente une longueur d'onde comprise entre 300 nm et 1200 nm, de préférence entre 500 nm et 1200 nm, de préférence entre 1000 nm et 1200 nm.

Selon un mode de réalisation, le procédé de durcissement laser comprend, avant l'exposition laser, une étape consistant à obtenir ou façonner par usinage, surfaçage, polissage, rectification, moulage la surface fonctionnelle pour obtenir une rugosité Ra inférieure à 2 µm, de préférence inférieure à 1µm, de préférence inférieure à 0.2 µm. Une telle rugosité garantit une bonne efficacité du traitement laser.

Selon un mode de réalisation, l'exposition au faisceau laser est prévue pour provoquer une compression locale de la matière de la pièce horlogère ou joaillère. On peut prévoir avec un tel faisceau laser de générer un plasma de très haute pression, de l'ordre de 10⁹ Pa qui se détend ensuite. La détente entraîne une compression de la surface fonctionnelle et cette source d'énergie de haute densité peut affecter l'orientation des grains et déclencher leur glissement, créant ainsi un nombre important de dislocations qui vont écrouir et durcir localement la surface fonctionnelle.

Selon un mode de réalisation, l'exposition au faisceau laser est prévue pour provoquer la formation et/ou le déplacement de dislocations dans la matière de la pièce horlogère ou joaillère.

Selon un mode de réalisation, le durcissement est exempt d'apport de matière, et/ou exempt d'implantation de matière, et/ou exempt de mise en fusion et re-solidification de la matière de la pièce horlogère ou joaillère, et/ou exempt de formation d'une couche de revêtement. En particulier, le procédé ne concerne pas le dopage de l'acier par des atomes Si avec un traitement laser pour le durcir (« Laser implant déposition (LID) »). En particulier, le procédé ne concerne pas l'implantation d'ions N⁺ dans une surface en titane avec un traitement laser pour la durcir (Combinaison « Pulsed Laser Déposition (PLD) » et « ion implantation »). En particulier, le procédé ne concerne pas l'implantation de nanoparticule par onde de choc générée par un faisceau laser (« Laser shock-wave-driven nanoparticle implantation »). En particulier, le procédé ne concerne pas l'implantation de nanoparticules SiC dans un substrat en aluminium avec un traitement laser pour le durcir. En particulier, le procédé ne concerne pas l'implantation de nanoparticules de diamant dans de l'acier avec un traitement laser pour le durcir. En particulier, le procédé ne concerne pas l'implantation de nanoparticules WC dans un alliage aluminium avec un traitement laser pour le durcir. En particulier, le procédé ne concerne pas un procédé avec une mise en fusion locale de la surface d'un matériau avec un laser comme source de chaleur, suivie d'une re-solidification (« Laser surface melting (LSM) »). En particulier, le procédé ne concerne pas un procédé avec un ajout progressif de matière pulvérisée sur les zones fondues par le laser, ou avec l'application d'un film de poudre sur le substrat avant de faire fondre l'ensemble au laser (« Laser Surface Alloying (LSA) »). En particulier, le procédé ne concerne pas un procédé avec la création d'une couche de métal sur le substrat (« Laser Surface Cladding (LSC) »). En particulier, le procédé ne concerne pas un procédé avec soit un ajout de particules après passage du laser (et donc fonte du substrat) soit avec l'application d'un film de poudre sur le substrat au préalable (« Laser Composite Surfacing (LCS) »).

L'invention peut se rapporter à un procédé de réalisation d'une pièce horlogère ou joaillère, telle qu'un axe de balancier, en alliage de préférence amagnétique, au moyen d'une machine comprenant un organe de préhension et un dispositif d'usinage, tel qu'un laser, monté sur un actuateur à commande numérique,
ledit procédé comprenant les étapes suivantes :
- se doter d'une pièce brute dudit alliage,
- imposer un déplacement relatif entre la pièce brute et le dispositif d'usinage,
- mettre la pièce brute en forme par usinage pour obtenir une pièce horlogère ou joaillère ayant au moins une partie fonctionnelle, telle qu'un axe de balancier comprenant un pivot à chaque extrémité,

- effectuer, selon le procédé de durcissement laser selon le premier aspect, une étape de durcissement laser sur ladite au moins une partie fonctionnelle, telle qu'un pivot de l'axe de balancier,
- de préférence, effectuer un traitement de finition tribologique, sans réalisation d'opération de roulage après la mise en forme.

Selon un mode de réalisation, le dispositif d'usinage comprend un outil de coupe. On peut prévoir de complètement former la pièce horlogère ou joaillère par enlèvement de matière (par découpe et formation de copeaux). On peut alternativement prévoir de former une ébauche par découpe avec l'outil de coupe et une finition par enlèvement de matière par usinage laser.

Selon un mode de réalisation, le dispositif d'usinage comprend une source laser et au moins une partie finale d'usinage de la pièce horlogère ou joaillère est effectuée par usinage laser. Selon un mode de réalisation, tout l'usinage de la pièce horlogère ou joaillère est effectuée par usinage laser.

Selon un mode de réalisation, la source laser du dispositif d'usinage est utilisée pour le procédé de durcissement laser. La même source laser peut servir pour usiner et enlever de la matière, selon un premier programme, et peut servir pour effectuer le durcissement laser selon un deuxième programme.

Selon un mode de réalisation, la pièce horlogère ou joaillère est formée en (ou consiste en) acier carbone, ou en acier inoxydable, de préférence en acier inoxydable austénitique, ou en acier amagnétique du type P2000, biodur 108 (acier inoxydable austénitique), et d'autres matières ne sont pas exclues, telles que des alliages métalliques susceptibles d'être écrouis. Par exemple, on peut prévoir des alliages d'or, plus particulièrement des alliages d'or 18 carats (or rouge, or rose, or jaune ou or gris).

Selon un mode de réalisation, la pièce horlogère ou joaillère comprend au moins une partie fonctionnelle en acier carbone, ou en acier inoxydable, de préférence en acier inoxydable austénitique, ou en acier amagnétique du type P2000, biodur 108 (acier inoxydable austénitique), et d'autres matières ne sont pas exclues, telles que des alliages métalliques susceptibles d'être écrouis.

Selon un mode de réalisation, la pièce horlogère ou joaillère peut être un axe, comme un axe de balancier, ou un palier, ou une roue dentée, ou un cliquet, ou une roue d'échappement, ou une ancre d'échappement ou un fermoir. Selon un mode de réalisation, la surface fonctionnelle peut être un pivot d'axe, un flanc de dent, une palette d'impulsion, un bec de repos, une corne d'ancre, une surface d'impulsion, ou une dent de loup, ou un bec de verrouillage.

Selon un autre mode de réalisation, la pièce horlogère ou joaillère peut être une pièce d'habillage comme une lunette, une carrure, un poussoir. Selon un mode de réalisation, la surface fonctionnelle peut être une portée (plane ou cylindrique), un épaulement d'appui, un alésage, un arbre, une cannelure, une rainure, un index de guidage, une came, une piste de came.

Selon un mode de réalisation, la dureté de la surface fonctionnelle peut être augmentée de plus de 5%, de préférence de plus de 10%, de préférence de plus de 15%, par rapport à une dureté de référence de la pièce brute (avant durcissement).

Selon un mode de réalisation, la surface fonctionnelle durcie présente une surface inférieure à 50%, inférieure à 20%, inférieure à 10% d'une surface totale de la pièce horlogère ou joaillère.

Selon un mode de réalisation, la surface fonctionnelle peut être une forme de révolution et peut présenter un diamètre inférieur à 1 mm, de préférence inférieur à 0,5 mm, de préférence inférieur à 0,1 mm. Le durcissement laser est bien adapté à ces dimensions d'axe.

### Description des figures

D'autres caractéristiques et avantages de la présente invention apparaîtront plus clairement à la lecture de la description détaillée qui suit de mode(s) de réalisation de l'invention donné(s) à titre d'exemple(s) nullement limitatif(s) et illustré(s) par les dessins annexés, dans lesquels :
[fig. 1] représente un axe de balancier comprenant des surfaces fonctionnelles pouvant être exposées à un faisceau laser pour être durcies selon un procédé de durcissement laser ;
[fig. 2] représente un système de fabrication pour fabriquer et/ou durcir des surfaces fonctionnelles de l'axe de balancier de la figure 1 ;
[fig. 3] représente un exemple de motif d'exposition au faisceau laser selon une première variante de réalisation pour durcir des surfaces fonctionnelles de l'axe de balancier de la figure 1 ;
[fig. 4] représente un exemple de motif d'exposition au faisceau laser selon une deuxième variante de réalisation pour durcir des surfaces fonctionnelles de l'axe de balancier de la figure 1 ;
[fig. 5] représente un exemple de motif d'exposition au faisceau laser selon une troisième variante de réalisation pour durcir des surfaces fonctionnelles de l'axe de balancier de la figure 1.

### Description détaillée de mode(s) de réalisation

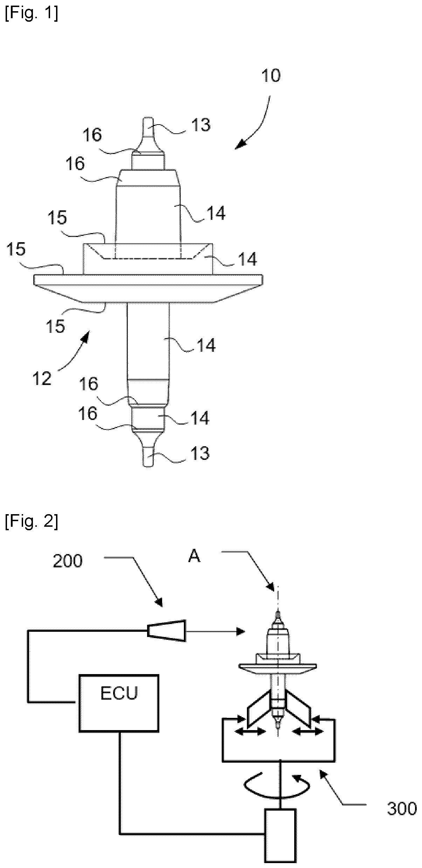

La figure 1 représente un axe de balancier 10 comprenant notamment :
- des pivots 13, formés à chaque extrémité de l'axe de balancier 10,
- des portées 14 cylindriques,
- au moins un épaulement 15, notamment un épaulement 15 pour former une assise au balancier chassé sur l'axe de balancier 10, et optionnellement un autre épaulement 15 avec une piqure pour former une lèvre de sertissage du balancier si ce dernier n'est pas chassé,
- au moins un chanfrein 16.

L'axe de balancier 10 peut être formé en acier carbone, ou en acier inoxydable, de préférence en acier inoxydable austénitique, ou en acier amagnétique du type P2000, biodur 108 (acier inoxydable austénitique), mais d'autres matières ne sont pas exclues, telles que des alliages métalliques susceptibles d'être écrouis.

Pour fabriquer l'axe de balancier 10 de la figure 1, au moyen d'une machine représentée figure 2 et comprenant une unité de commande ECU, un organe de préhension 300 avec des mors et un dispositif d'usinage 200, ici un laser, monté sur un actuateur à commande numérique,
on peut proposer un procédé de fabrication comprenant les étapes suivantes :
- se doter d'un barreau,
- imposer un déplacement relatif entre le barreau et le dispositif d'usinage 200, ici une rotation du barreau autour de l'axe A et un déplacement le long de l'axe A du dispositif d'usinage 200,
- mettre le barreau en forme par usinage pour obtenir un axe de balancier 10 comprenant un pivot 13 à chaque extrémité,
- effectuer un procédé de durcissement laser sur les pivots 13 de l'axe de balancier 10,
- optionnellement, effectuer un traitement de finition tribologique, sans réalisation d'opération de roulage après la mise en forme.

Pour effectuer l'usinage laser, on peut directement partir d'un barreau cylindrique d'un diamètre supérieur ou égal au diamètre de l'épaulement 15 et complètement usiner l'axe de balancier 10 par usinage laser, mais on peut aussi prévoir de réaliser préalablement une ébauche par décolletage, et faire la mise aux cotes finales par usinage laser en usinant une fine épaisseur de matière restante. On peut tout aussi bien prévoir de former l'axe de balancier 10 uniquement par usinage avec un outil de coupe, par enlèvement de matière et formation de copeaux.

En ce qui concerne le dispositif d'usinage avec un laser, on peut prévoir une source laser à impulsions ultra-brèves, comme par exemple un laser femtoseconde, ou un laser picoseconde.

On peut en tout état de cause prévoir de terminer la fabrication des pivots 13 avec une étape spécifique avant le procédé de durcissement pour obtenir une rugosité Ra inférieure à 3,2 µm, de préférence inférieure à 1,6 µm, de préférence inférieure à 0,8 µm, de préférence inférieure à 0,4 µm.

Le procédé de durcissement peut utiliser la même source laser que celle utilisée pour l'usinage, et comprend typiquement la génération d'un faisceau laser et l'exposition des pivots 13 (leur surface externe) au faisceau laser. On peut prévoir les paramètres suivants :
- le faisceau laser peut présenter une fluence comprise entre 0,2 et 400 J/cm², de préférence entre 0,3 et 250 J/cm², de préférence entre 5 et 135 J/cm², et de préférence entre 10 et 120 J/cm²,
- le faisceau laser peut comprendre entre 1 et 2000 impulsions, de préférence entre 20 et 1000 impulsions, et de préférence entre 50 et 200 impulsions,
- le faisceau laser peut comprendre une pluralité d'impulsions et dans lequel l'exposition de la surface fonctionnelle est effectuée avec un recouvrement d'au moins une partie des impulsions compris entre 80 % et 8000 %, de préférence entre 100 % et 4000 %, et de préférence entre 200 % et 2000 %, et à cet effet, on peut prévoir une vitesse d'avance prévue pour garantir ces gammes de recouvrement,
- le faisceau laser peut comprendre au moins une impulsion laser d'une durée comprise entre 100 et 20000 femtosecondes, de préférence entre 100 et 10000 femtosecondes, de préférence entre 100 et 5000 femtosecondes, de préférence entre 100 et 1000 femtosecondes, de préférence entre 100 et 500 femtosecondes, et de préférence entre 300 et 500 femtosecondes,
- le faisceau laser peut présenter une dimension d'irradiation, telle que la taille du spot, comprise entre 1 et 100 µm, de préférence entre 1 et 50 µm, et de préférence entre 1 et 20 µm,
- le faisceau laser peut présenter une longueur d'onde comprise entre 300 nm et 1200 nm, de préférence entre 500 nm et 1200 nm, de préférence entre 1000 nm et 1200 nm,
- le faisceau laser peut présenter une polarisation sensiblement perpendiculaire à l'impact de ladite au moins une impulsion, ou le faisceau laser peut présenter une polarisation sensiblement circulaire.

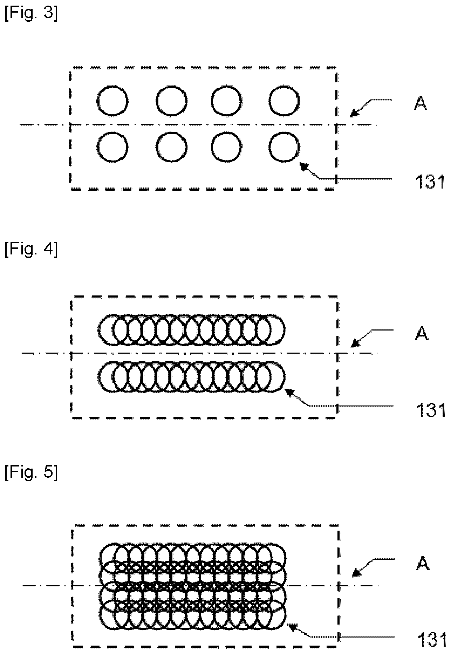

La figure 3 représente un exemple de motif d'exposition au faisceau laser selon une première variante de réalisation pour durcir les pivots 13, où la surface fonctionnelle (la surface de pivots 13) a été exposée de manière à former des impacts 131 séparés selon la direction de l'axe A de la pièce et selon une direction tangentielle à l'axe A de la pièce. Chaque impact 131 peut typiquement avoir reçu plusieurs impulsions.

La figure 4 représente un exemple de motif d'exposition au faisceau laser selon une deuxième variante de réalisation pour durcir les pivots 13, où la surface fonctionnelle (la surface de pivots 13) a été exposée de manière à former des lignes d'impacts 131 parallèles à l'axe A de la pièce et séparées selon une direction tangentielle à l'axe A de la pièce. On peut donc noter un recouvrement entre chaque impact 131 selon la direction de l'axe A de la pièce. Sur la figure 4, chaque impact 131 peut avoir reçu plusieurs impulsions ou avoir reçu une seule impulsion.

La figure 5 représente un exemple de motif d'exposition au faisceau laser selon une troisième variante de réalisation pour durcir les pivots 13, où la surface fonctionnelle (la surface de pivots 13) a été exposée de manière être complètement recouverte par des lignes d'impacts 131 parallèles à l'axe A de la pièce et se recouvrant selon une direction tangentielle à l'axe A de la pièce. On peut donc noter un recouvrement entre chaque impact 131 selon la direction de l'axe A de la pièce et selon une direction tangentielle à l'axe A de la pièce. Sur la figure 5, chaque impact 131 peut avoir reçu plusieurs impulsions ou avoir reçu une seule impulsion.

Pour une pièce en acier inoxydable du type P2000 / 1.4452 dont une surface fonctionnelle a été exposé au faisceau laser pour augmenter la dureté, on peut noter que la dureté de référence de la pièce brute avant usinage et/ou avant durcissement est de 685 HV. Des mesures effectuées par nanoindentation selon la norme ISO14577 ont permis de démontrer une augmentation de la dureté à 740 HV environ.

### Application industrielle

Un procédé de durcissement laser selon la présente invention est susceptible d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Procédé de durcissement laser d'une partie fonctionnelle d'une pièce horlogère ou joaillère, comprenant les étapes consistant à :
- se munir de la pièce horlogère ou joaillère,
- générer un faisceau laser avec un laser à impulsions ultra-brèves,
- exposer une surface fonctionnelle de la pièce horlogère ou joaillère au faisceau laser pour augmenter la dureté de la surface fonctionnelle.

2. Procédé de durcissement laser selon la revendication 1, dans lequel l'exposition de la surface fonctionnelle conduit à générer un plasma prévu pour augmenter la dureté de la surface fonctionnelle.

3. Procédé de durcissement laser selon la revendication 1 ou 2, dans lequel l'exposition de la surface fonctionnelle conduit à générer une onde de choc prévue pour augmenter la dureté de la surface fonctionnelle.

4. Procédé de durcissement laser selon l'une des revendications 1 à 3, dans lequel le faisceau laser comprend entre 1 et 2000 impulsions, de préférence entre 20 et 1000 impulsions, et de préférence entre 50 et 200 impulsions.

5. Procédé de durcissement laser selon l'une des revendications 1 à 4, dans lequel le faisceau laser présente une fluence comprise entre 0,2 et 400 J/cm², de préférence entre 0,3 et 250 J/cm², de préférence entre 5 et 135 J/cm², et de préférence entre 10 et 120 J/cm².

6. Procédé de durcissement laser selon l'une des revendications 1 à 5, dans lequel le faisceau laser présente une polarisation sensiblement perpendiculaire à l'impact de ladite au moins une impulsion.

7. Procédé de durcissement laser selon l'une des revendications 1 à 5, dans lequel le faisceau laser présente une polarisation sensiblement circulaire.

8. Procédé de durcissement laser selon l'une des revendications 1 à 7, dans lequel le faisceau laser comprend une pluralité d'impulsions et dans lequel l'exposition de la surface fonctionnelle est effectuée avec un recouvrement d'au moins une partie des impulsions compris entre 80 % et 8000 %, de préférence entre 100 % et 4000 %, et de préférence entre 200 % et 2000 %.

9. Procédé de durcissement laser selon l'une des revendications 1 à 8, dans lequel le faisceau laser comprend au moins une impulsion laser d'une durée comprise entre 100 et 20000 femtosecondes, de préférence entre 100 et 10000 femtosecondes, de préférence entre 100 et 5000 femtosecondes, de préférence entre 100 et 1000 femtosecondes, de préférence entre 100 et 500 femtosecondes, et de préférence entre 300 et 500 femtosecondes.

10. Procédé de durcissement laser selon l'une des revendications 1 à 9, dans lequel le faisceau laser présente une dimension d'irradiation, telle que la taille du spot, comprise entre 1 et 100 µm, de préférence entre 1 et 50 µm, et de préférence entre 1 et 20 µm.

11. Procédé de durcissement laser selon l'une des revendications 1 à 10, dans lequel le faisceau laser présente une longueur d'onde comprise entre 300 nm et 1200 nm, de préférence entre 500 nm et 1200 nm, de préférence entre 1000 nm et 1200 nm

12. Procédé de durcissement laser selon l'une des revendications 1 à 11, comprenant, avant l'exposition laser, une étape consistant à obtenir par usinage, surfaçage, polissage, rectification, moulage la surface fonctionnelle pour obtenir une rugosité Ra inférieure à 2 µm, de préférence inférieure à 1µm, de préférence inférieure à 0.2 µm.

13. Procédé de durcissement laser selon l'une des revendications 1 à 12, dans lequel l'exposition au faisceau laser est prévue pour provoquer une compression locale de la matière de la pièce horlogère ou joaillère.

14. Procédé de durcissement laser selon l'une des revendications 1 à 13, dans lequel l'exposition au faisceau laser est prévue pour provoquer la formation et/ou le déplacement de dislocations dans la matière de la pièce horlogère ou joaillère.

15. Procédé de réalisation d'une pièce horlogère ou joaillère, telle qu'un axe de balancier, en alliage de préférence amagnétique, au moyen d'une machine comprenant un organe de préhension et un dispositif d'usinage, tel qu'un laser, monté sur un actuateur à commande numérique, ledit procédé comprenant les étapes suivantes :
- se doter d'une pièce brute dudit alliage,
- imposer un déplacement relatif entre la pièce brute et le dispositif d'usinage,
- mettre la pièce brute en forme par usinage pour obtenir une pièce horlogère ou joaillère ayant au moins une partie fonctionnelle, telle qu'un axe de balancier comprenant un pivot à chaque extrémité,
- effectuer, selon le procédé de durcissement laser selon l'une des revendications 1 à 14, une étape de durcissement laser sur ladite au moins une partie fonctionnelle, telle qu'un pivot de l'axe de balancier,
- de préférence, effectuer un traitement de finition tribologique, sans réalisation d'opération de roulage après la mise en forme.
